(19) Europäisches Patentamt
European Patent Office
Office européen des brevets

(11) **EP 3 291 691 B1**

(12) **EUROPEAN PATENT SPECIFICATION**

(45) Date of publication and mention of the grant of the patent:
**07.06.2023 Bulletin 2023/23**

(21) Application number: **16721790.0**

(22) Date of filing: **06.05.2016**

(51) International Patent Classification (IPC):
**A23K 20/142** *(2016.01)*    **A23K 20/20** *(2016.01)*
**A23K 50/30** *(2016.01)*

(52) Cooperative Patent Classification (CPC):
**A23K 20/20; A23K 20/142; A23K 50/30**

(86) International application number:
**PCT/EP2016/060213**

(87) International publication number:
**WO 2016/177891 (10.11.2016 Gazette 2016/45)**

(54) **THE USE OF NITRATE FOR TREATING POST-PARTURIENT DYSGALACTIA IN MONOGASTRIC MAMMALS**

VERWENDUNG VON NITRAT ZUR BEHANDLUNG VON POST-GEBÄRDYSGALACTIE BEI MONOGASTRISCHEN SÄUGETIEREN

UTILISATION DE NITRATE POUR TRAITER DE DYSGALACTIE POST-PARTURIENT CHEZ LES MAMMIFÈRES MONOGASTRIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.05.2015 NO 20150560**

(43) Date of publication of application:
**14.03.2018 Bulletin 2018/11**

(73) Proprietor: **YARA International ASA**
**0213 Oslo (NO)**

(72) Inventors:
• **ANDERSSON, Christian**
**SE-26652 Vejbystrand (SE)**
• **FROGNER, Tore**
**N-3410 Sylling (NO)**
• **GÖRANSSON, Leif**
**SE-26023 Kågerrød (SE)**

(74) Representative: **De Clercq & Partners**
**Edgard Gevaertdreef 10a**
**9830 Sint-Martens-Latem (BE)**

(56) References cited:
**WO-A1-2016/090366**

• **R. W. SEERLEY, R. J. EMERICK, L. B. EMBRY AND O. E. OLSON: "Effect of Nitrate or Nitrite Administered Continuously in Drinking Water for Swine and Sheep", JOURNAL OF ANIMAL SCIENCE, vol. 24, no. 4, 1965, pages 1014-1019, XP002759559, US NEW YORK, NY ISSN: 0021-8812**
• **DATABASE BIOSIS [Online] BIOSCIENCES INFORMATION SERVICE, PHILADELPHIA, PA, US; 1991, BOUSKA J: "AN EFFECT OF INCREASED NITRATES LEVELS ON THE STATE OF HEALTH OF PREGNANT SOWS", XP002759560, Database accession no. PREV199293117510 & BOUSKA J: "AN EFFECT OF INCREASED NITRATES LEVELS ON THE STATE OF HEALTH OF PREGNANT SOWS", BIOPHARM (JILOVE), vol. 1, no. 5, 1991, pages 215-222, ISSN: 0862-9684**
• **BOSI, ET AL.: "Effect of dietary addition of nitrate on growth, salivary and gastric function, immune response, and excretion of Salmonella enterica serovar Typhimurium, in weaning pigs challenged with this microbe strain", ITALIAN JOURNAL OF ANIMAL SCIENCE, vol. 6, no. Suppl. 1, 2007, pages 266-268, XP002763750,**

- GAYLORD D. PAULSON ET AL: "Effect of high dietary nitrate on the disposition of sulfamethazine [4-amino-N-(4,6-dimethyl-2-pyrimidinyl)ben zenesulfonamide] in swine", JOURNAL OF AGRICULTURAL AND FOOD CHEMISTRY, vol. 38, no. 1, 1 January 1990 (1990-01-01), pages 308-310, XP55315458, US ISSN: 0021-8561, DOI: 10.1021/jf00091a067
- DATABASE WPI Week 201468 2014 Thomson Scientific, London, GB; AN 2014-S54516 XP002759561, & CN 103 931 907 A (LI Z) 23 July 2014 (2014-07-23)
- DATABASE WPI Week 201427 2014 Thomson Scientific, London, GB; AN 2014-A37328 XP002759562, & KR 2013 0137485 A (UNIV GYEONGSANG IND ACAD COOP FOUND) 17 December 2013 (2013-12-17)
- DATABASE FSTA [Online] INTERNATIONAL FOOD INFORMATION SERVICE (IFIS), FRANkFURT-MAIN, DE; 2002, TIMOSENKO N V ET AL: "The effect of fattening technology on the quality of meat for children's food.", XP002759563, Database accession no. FS-2002-04-Sa0459 & TEHNOLGIJA MESA, vol. 42, no. 3/4, 2001, - 2001, page 157, TEHNOLOGIJA MESA 2001 SVERUSKI NAUCNO-ISTRAZIVACKI, INST. IND. MESA, MOSCOW, RUSSIA
- WU ET AL: "Important roles for the arginine family of amino acids in swine nutrition and production", LIVESTOCK SCIENCE, ELSEVIER, AMSTERDAM, NL, vol. 112, no. 1-2, 5 October 2007 (2007-10-05), pages 8-22, XP022286966, ISSN: 1871-1413, DOI: 10.1016/J.LIVSCI.2007.07.003
- D. TYDLITÁT ET AL: "Impact of Crude Protein Intake in Last 14 Days of Pregnancy on Puerperium, Piglet Loss Prior to Weaning and Subsequent Reproduction of Sows", ACTA VETERINARIA BRNO, vol. 76, no. 4, 1 January 2007 (2007-01-01), pages 585-593, XP055316012, CZ ISSN: 0001-7213, DOI: 10.2754/avb200776040585
- DATABASE WPI Week 201031 Thomson Scientific, London, GB; AN 2010-E00291 XP002763751, & CN 101 675 754 A (CHEN J) 24 March 2010 (2010-03-24)
- Anon.: "Nitrates and Dairy Cattle", , 1 January 2014 (2014-01-01), XP055316093, Retrieved from the Internet: URL:http://dairyone.com/wp-content/uploads /2014/01/Nitrates-and-Dairy-Cattle.pdf [retrieved on 2016-11-03]

## Description

## Technical Field

The present invention is related to the field of breeding domestic livestock, in particular to animal nutrition for domestic livestock, more in particular to nutritional supplements and additives for breeding monogastric mammals.

Prior art

Nitrate is usually associated with nitrite poisoning, e.g. in cattle grazing crops (P.J. O'Hara and A.J. Fraser, Nitrate poisoning in cattle grazing crops, New Zealand Veterinary Journal, 23 (4), 1975). Nitrates ($NO^{-3}$) themselves are not very toxic, contrary to nitrites ($NO^{-2}$) to which they are converted (reduced). Acutely, nitrite is approximately ten-fold more toxic than nitrate.

Because of its potential for toxicity at excessive levels of intake, the Directive (EC) No 2002/32/EC on undesirable substances in animal feed established maximum limits for sodium nitrite in complete animal feeds excluding feeds, intended for pets, except birds and aquarium fish, and fish meal, of 15 and 60 mg/kg, respectively (corresponding to 10 and 40 mg/kg for the nitrite ion). Nitrite in drinking water is regulated in Europe, with a maximum level of 0.5 mg/L. The Acceptable Daily Intake (ADI) for nitrite of 0 to 0.07 mg/kg body weight per day has been endorsed by the Panel on Contaminants in the Food Chain (CONTAM Panel) of the European Food Safety Authority during the recent risk benefit assessment of nitrate in vegetables (The EFSA Journal 1017, 1-47 (2009)).

In ruminant animals such as cattle, sheep and goats, the conversion of nitrate to nitrite is carried out by rumen bacteria. In the rumen, the reduction of nitrate to nitrite occurs rapidly whereas the conversion into ammonia (the detoxification of nitrite) is a slower process.

Ruminants are not very sensitive to moderate levels of nitrate, but care must be taken with higher doses of nitrate. Initial development of poisoning occurs when the nitrite level in the rumen exceeds the microbe's capacity to convert nitrite to ammonia. Nitrite is subsequently absorbed across the rumen wall into the bloodstream where it combines with haemoglobin in the red blood cells and forms methaemoglobin, reducing the capacity of the red blood cells to carry oxygen to body tissue.

Reports of adverse effects after excessive nitrite exposure in livestock exist, and pigs and ruminants, as major food producing animals, are particularly susceptible: this is because of relatively low nitrite reductase activity and high levels of rumen conversion of exogenous nitrate to nitrite, respectively. Hence, the presence of high nitrate and nitrite concentrations in food has been reported to be associated with increased risk of intestinal cancer and methaemoglobinemia which decrease the blood transport capacity of oxygen. On the other hand, recent findings indicate no significant link between nitrate and cancer. In addition, nitrite accumulation in the rumen is known to reduce microbial activity in the rumen, which, inter alia, may reduce feed intake by the animal.

In contrast, monogastric mammals like horses and pigs do not have rumen bacteria for conversion of nitrates to nitrites, which occurs with monogastric mammals in the intestine, i.e. closer to the end of the digestive tract. In this situation, there is a less opportunity for the nitrites to be absorbed. This being said, it should be noted that pigs are amongst the most sensitive species due to their low methaemoglobin reductase activities in red blood cells and should not be exposed to large amounts of nitrate (and nitrite).

The inventors have recognized this difference between ruminants and monogastric mammals.

Reports on the physiological role of dietary nitrate for mammals are scarce and give a diverse and often conflicting view on the subject matter.

Dietary nitrate and nitrite are transformed in the body in several ways, by the action of bacterial nitrate reductases on the tongue and by mammalian enzymes that have nitrate reductase activity in tissues, and mammalian enzymes that have nitrite reductase activity. Contrary to its reputation as a poison, nitric oxide and or other metabolic products of nitrates widen the blood vessels, decrease blood pressure and support cardiovascular function. This role of nitrite and a protective action against low oxygen supply in different tissues paints a different picture and has led to a renewed interest in the physiological and pharmacological properties of nitrite and nitrate (Butler AR, Feelisch M.. Therapeutic Uses of Inorganic nitrite and nitrate from the past to the future. Circulation 117, 2151-2159 (2008)). Many vegetables and fruits contain high levels of nitrate and it has been hypothesised that the blood pressure-lowering effect of plant foods may be effects of their nitrate content (Hord ND, Tang Y, Bryan NS. Food sources of nitrates and nitrites: the physiologic context for potential health benefits. Am J Clin Nutr 90:1-10 (2009)). Interestingly, both potassium nitrite, in 1880, and potassium nitrate, in 8th century China, was known to mediate hypotensive and antianginal actions (protection against angina pectoris).

In vitro acidified nitrite has been demonstrated to have a substantial antimicrobial effect on human pathogens (Dykhuizen RS, Frazer R, Duncun C, Smith C, Golden M, Benjamin N, Leifert C. Antimicrobial effect of acidified nitrite on gut pathogens: Importance of dietary nitrate in host defense. Antimicrobial agents and chemotherapy 40, 1422-1425 (1996)). Challenges with high dietary nitrate in pigs increased nitrite in saliva, which decreased the microbial diversity in the mouth of the pigs (Trevisi P, Casini L, Nisi I, Messori S, Bosi P. Effect of high oral doses of nitrate on salivary recirculation of nitrates and nitrites and on bacterial diversity in the saliva of young pigs. J Anim Phys and Anim Nutr 95, 206-213 (2011)).

Increased nitrite in saliva was also found in another piglet study with high level of nitrate in the diet (Posi P, Casini L, Tittarelli C, Minieri L, De Filippi S, Trevisi R, Clavenzani R, Mazzoni M. Effect of dietary addition of nitrate on growth, salivary and gastric function, immune response, and excretion of Salmonella enterica serovar typhimurium, in weaning pigs challenged with this microbe strain. It J Anim Sci 6 Suppl 1, 266-268 (2007). Although these piglets were orally challenged with salmonella, no decrease in number of salmonella in the gut was found. Interestingly, IgA in serum tended to increase in pigs fed the high nitrate diet and the productive performance was not adversely affected.

The finding that high dietary nitrate does not affect the colonisation of salmonella in the stomach and jejunum of newly weaned piglets was also demonstrated in another study (Modesto M, D'Aimmo MR, Stefanini I, Mazzoni M, Bosi P, Biavati B. Antimicrobial effect of dietary nitrate in weaning piglets challenged or not with Salmonella enterica serovar typhimurium. Cultivating the Future Based on Science: 2nd Conference of the International Society of Organic Agriculture Research ISOFAR, Modena, Italy, June 18-20, 2, 146-149 (2008)), which on the other hand reported a reduction of lactic acid bacteria in the mentioned segments. This reference points out that ulceration was not affected. In a later report from the same research team (Modestoa M, Stefaninia I, D'Aimmoa MR, Nissena L, Tabanellia D, Mazzonib M, Bosib P, Strozzic GP, Biavatia B. Strategies to augment non-immune system based defence mechanisms against gastrointestinal diseases in pigs. Wageningen J Life Sci 58, 149- 156 (2011)), a maximum level of nitrate, allowed by the EU for feedstuffs, was combined with one pro- and one prebiotic substance in a diet for weaned piglets. The experimental diet did not affect the content of lactic acid bacteria, clostridia and yeasts in stomach or jejunum, nor did it affect E. coli contents. The use of nitrate in combination with a probiotic improved however weight gain, feed efficiency and health status of the weaned piglets.

In a Danish study (M.T Sorensen, B.B Jensen, H.D Poulsen Nitrate and pig manure in drinking water to early weaned piglets and growing pigs, Livestock Production Science 39(2) 223-227 (1994)) inclusion of nitrate in the water for weaned piglets significantly reduced the number of coliform bacteria in the whole gastrointestinal tract and enhanced the level of lactic acid and ammonia in the stomach and first segments of the small intestine. Feed conversion and weight gain were significantly improved for piglets with nitrate added in the drinking water.

No references are cited where nitrate was fed to gestating or lactating female monogastric mammals.

The use of nitrate in animal feed for ruminants, such as cattle, has been disclosed in WO2011/010921 A2 (Provimi, 2011) which discloses a non-therapeutic method of reducing gastro-intestinal methane production in a ruminant, said method comprising administering to said ruminant an effective amount of a combination of a nitrate compound and a sulphate compound.

Patra, A.K. and Yu, Z. disclose combinations of nitrate, saponin and sulphate to additively reduce methane production by rumen cultures in vitro while not adversely affecting feed digestion, fermentation or microbial communities, Bioresource Technology 155, pp. 129-135 (2014).

In the article *E*ffect of nitrate or nitrite administered continuously in drinking water for swine and sheep, R.W. Seerley et al., Journal of Animal Science, vol. 24, no. 4, 1965, pages 1014 - 1019, experiment 3 related to a study of the effect of sodium nitrate in drinking water at a level equivalent to 300 ppm of $NO_3$-N on rate of gain and reproduction in gilts. The result of this experiment was that no evidence was obtained to indicate that water containing 300 ppm $NO_3$-N as the only source of water for gilts from weaning through two gestation periods had any detrimental effect on gain, reproductive performance or health of the offspring. This article however does not mention the effect of administering nitrate to gilts on the risk of PDS (Post-parturient Dysgalactia Syndrome).

D. Tydlitat et al. Acta Veterinaria BRNO, vol.76, no.4, 2007, p.585-593 discusses the problem of post-parturient agalactica syndromes in swine, one of which syndromes is dysgalactica.

The use of an inorganic nitrate compound for improving the (re)productive performance of a female monogastric mammal has not been disclosed nor suggested in the prior art and is therefore deemed novel and inventive.

Summary of the invention

According to an aspect of the invention, an animal feed supplement comprising 10 to 100 weight% of an inorganic nitrate compound for use in the prophylactic and/or therapeutic treatment of Postparturient Dysgalactia Syndrome in a lactating and/or gestating non-human monogastric mammal, thereby lowering the risk of Post-parturient Dysgalactia Syndrome, is disclosed. It should be clear for the skilled person that the method according to the invention is directed to the female mammal, either or both of gestating, and having given birth to newborns and lactating said newborns, thereby feeding the newborns.

In an embodiment of an animal feed supplement for use according to the invention, the inorganic nitrate compound is selected from the group of sodium nitrate, potassium nitrate, calcium nitrate, ammonium nitrate, or any combination thereof, most preferably the compound, represented by the formula $5Ca(NO_3)_2 \cdot NH_4NO_3 \cdot 10H_2O$.

The inorganic nitrate compound is more in particular available in the form of a powder, a compacted powder, a crystal, a prill, a granule, a liquid, a gel, a solution, a liquid, or a flake.

A possible embodiment of an animal feed supplement for use according to the present invention further comprises 1 to 50 weight% of L-arginine.

According to a further aspect of the present invention, a compounded animal feed composition comprising animal feed supplement comprising 10 to 100 weight% of an inorganic nitrate compound, providing a total amount of nitrate in excess of 0.1 g/kg, on a dry weight basis, for use in the prophylactic and/or therapeutic treatment of Post-parturient Dysgalactia Syndrome in a gestating and/or lactating non-human monogastric mammal, thereby lowering the risk of Post-parturient Dysgalactia Syndrome is described.

According to still another aspect of the present invention, an inorganic nitrate for use in the prophylactic and/or therapeutic treatment of Post-parturient Dysgalactia Syndrome a lactating and/or gestating non-human monogastric mammal, thereby lowering the risk of Post-parturient Dysgalactia Syndrome is disclosed.

In an optional embodiment of an inorganic nitrate for use according to the present invention, the inorganic nitrate is selected from the group of sodium nitrate, potassium nitrate, calcium nitrate, ammonium nitrate, or any combination thereof, most preferably the compound, represented by the formula $5Ca(NO_3)_2 \cdot NH_4NO_3 \cdot 10H_2O$.

In an embodiment of an inorganic nitrate for use according to the present invention, the inorganic nitrate is given in a daily dosage of nitrate in excess of 1 mg/kg body weight, preferably within the range of 1 to 320 mg/kg body weight.

According to a further aspect of the present invention, a feed is described for use according to the present invention, which is suitable for a non-human female monogastric mammal in lactation and/or gestation phase, comprising:

- 50 - 200 g/kg, preferably 100 -150 g/kg of crude protein,
- 10-100 g/kg, preferable 10-50 g/kg of crude fat,
- 25-200 g/kg, preferably 50-100 g/kg of crude fiber,
- 150 - 600 g/kg, preferably 200 - 400 g/kg of starch,
- 25 - 200 g/kg, preferably 50 - 100 g/kg of sugar, and
- 0.1 - 5 weight%, preferably 0.2 - 2 weight% of calcium ammonium nitrate, most preferably the compound, represented by the formula $5Ca(NO_3)_2 \cdot NH_4NO_3 \cdot 10H_2O$, for use in the treatment of a lactating and/or gestating monogastric mammal for lowering the risk of Post-parturient Dysgalactia Syndrome.

In an embodiment of a feed for use according to the present invention, the feed in addition comprises 1.25 - 10 weight% of arginine.

**Detailed description of the invention**

In this description and in the attached claims, the verb "to comprise" and its conjugations is used in its non-limiting sense to mean that items following the word are included, but items not specifically mentioned are not excluded. In addition, reference to an element by the indefinite article "a" or "an" does not exclude the possibility that more than one of the element is present, unless the context clearly requires that there be one and only one of the elements. The indefinite article "a" or "an" thus usually means "at least one".

Within the context of the present invention, it is clear that the mammal according to the invention is always a female mammal, gestating or lactating after farrowing. Hence, when the wording "mammal" is used, it is implicitly understood that a female mammal is meant.

Within the context of the present invention, a monogastric mammal is defined as a mammal having a simple single-chambered stomach, in comparison with a ruminant mammal, such as a cow, goat, or sheep, which has a four-chambered complex stomach. Examples of monogastric mammals comprise omnivores such as, for example, monkeys, rats, dogs and pigs, and carnivores such as, for example cats, and herbivores such as, for example, horses and rabbits. Herbivores with monogastric digestion can digest cellulose in their diets by way of symbiotic gut bacteria. However, their ability to extract energy from cellulose digestion is less efficient than in ruminants. Preferably, the monogastric mammal is a porcine species, in particular a swine or pig, more in particular a piglet, a gilt or a sow. The term " monogastric mammal " is equivalent with the term "non-ruminant".

Within the context of the present invention, a monogastric mammal does not comprise a human. A human mammal is explicitly excluded from the scope of the present invention.

According to an aspect, the invention concerns use of inorganic nitrate and inorganic nitrate-supplemented feed in therapeutic and/or prophylactic treatment of monogastric gestating or lactating mammals. As demonstrated, it is shown that nitrate supplementation of said mammal could decrease the number of potentially endotoxin-producing bacteria in the gut of said mammal, thereby lowering the risk of PDS (Post-parturient Dysgalactia Syndrome). It is also hypothesised that inorganic nitrate and inorganic nitrate-supplemented feed could improve the nutrient supply of the foetus in the gestating mammal by improving angiogenesis and/or vascularization of the placenta, by which the development of embryos and foetuses in the uterus is improved.

The inorganic nitrate compound, being a feed additive, can be administered to a female monogastric mammal in several forms, some of which are discussed below. According to one embodiment, the feed additive can be admixed with other feed additives into a premix, further optionally comprising vitamins, trace elements, enzymes and other additives. Such premix is suitable for being added to a feed supplement or a complete compounded animal feed. According to another embodiment, the feed additive can also be directly mixed with the complete feed or with the feed supplement. For example, the feed additive can be admixed with a feed supplement in the form of a top dress, a mineral feed, a licking block or other forms of supplemental feeds.

Animal feed supplement

As used, herein the term "animal feed supplement" refers to a premix or a feed supplement, as defined above.

According to a further aspect, the invention is concerned with an animal feed supplement comprising 10 to 100 weight% of an inorganic nitrate compound for use in the treatment of a gestating and/or lactating monogastric mammal for use in the treatment of a lactating monogastric mammal for lowering the risk of PDS (Post-parturient Dysgalactia Syndrome).

Typically, the animal feed supplement of the present invention is in the form of a powder or compacted,-granulated solid or liquid. In practice, the animal feed supplement may typically be fed to the livestock by adding it directly to the ration, e.g. as a so-called top-dress, or it may be used in the preparation or manufacture of products such as compounded animal feeds or lick blocks, which will be described in more detail hereafter. The invention is not particularly limited in this respect. An animal feed supplement, according to the invention is typically fed to an animal in an amount ranging from 16 to 2500 g/animal/day.

The present animal feed supplement comprises a nitrate compound, typically a physiologically acceptable or tolerated nitrate compound, preferably of feed quality. In accordance with the invention, the nitrate ion needs to be readily available for reduction to nitrite and the nitrate compound should have sufficient solubility in water. Hence, in accordance with this invention, the inorganic nitrate compound is preferably an ionic nitrate compound, most preferably an inorganic nitrate salt, most preferably selected from the group of sodium nitrate, potassium nitrate, calcium nitrate, ammonium nitrate, or any combination, mixture or double salt thereof, all of which are readily soluble in water at standard temperature and pressure. Furthermore, from a health and safety perspective, it is typically preferred to use complex inorganic nitrate salts, most preferably the compound, represented by the formula $5Ca(NO_3)_2 \cdot NH_4NO_3 \cdot 10H_2O$, which is commercially available from Yara International ASA, Norway and which is available in feed quality.

The inorganic nitrate compound may be available in the form of a powder, a compacted powder, a crystal, a prill, granule, a liquid, a gel, or a flake.

According to a preferred embodiment of the invention, the animal feed supplement comprises the inorganic nitrate compound in an amount ranging from 10 to 100 weight%, preferably said amount is in excess of 10, 20, 30, 40, 50, 60, 70, 80, 90, 95, 97 or 99 weight%, on a dry weight basis.

The inorganic nitrate compound in the animal feed supplement of the invention typically provides a total amount of nitrate in excess of 0,2 g/kg, on a dry weight basis. In practice, said amount typically is below 750 g/kg.

All the amounts and/or dosages of 'nitrate' as used herein, unless indicated otherwise, refer to the weight of nitrate comprised in or provided by the nitrate compounds, relative to total dry weight of the composition, as will be understood by the skilled person. It is within the skills of the skilled person to determine exactly the ideal amounts of the components to be included in the supplement and the amounts of the supplement to be used in the preparation of the ration or compounded animal feed, etc., taking into account the specific type of mammal and the circumstances under which it is held. Preferred dosages of each of the components are given below.

The animal feed supplements of the present invention may comprise any further ingredient without departing from the scope of the invention. It may typically comprise well-known excipients that are necessary to prepare the desired product form and it may comprise further additives that are aimed at improving the quality of the feed and/or at improving the performance of the animal consuming the supplement. Suitable examples of such excipients include carriers or fillers, such as lactose, sucrose, mannitol, starch, crystalline cellulose, sodium hydrogen carbonate, sodium chloride and the like, and binders such as gum Arabic, gum tragacanth, sodium alginate, starch, PVP and cellulose derivatives, etc. Examples of feed additives that are known to those skilled persons include vitamins, amino acids and trace elements, digestibility enhancers and gut flora stabilizers and the like.

In a preferred embodiment, the animal feed supplement additionally comprises an effective amount of L-arginine, as described in EP1408771 A1, such that a daily dosage of at least 200 mg L-arginine per kg bodyweight of said mammal, preferably of 200 to 1300 mg L-arginine per kg bodyweight of said mamma is administered to said mammal. Preferably, said animal feed contains 1 to 50 weight%, more preferably 1.25 to 10 weight% of L-arginine.

In a special embodiment, the invention provides a licking stone (also called licking block) comprising the supplement of the invention. As is known to those skilled in the art, such licking stones are particularly convenient for feeding mineral supplements (as well as proteins and carbohydrates), for example to horses grazing either or both natural and cultivated pastures. Such licking stones in accordance with the present invention typically comprise, in addition to the inorganic nitrate compound, various types of binders, e.g. cements, gypsum, lime, calcium phosphate, carbonate, and/or gelatine, and optionally further additives such as vitamins, trace elements, mineral salts, sensory additives, etc.

Compounded animal feed

A further aspect of the invention concerns a product such as a compounded animal feed the animal feed supplement as defined herein before.

According to one aspect of the invention, a compounded animal feed composition is provided comprising an inorganic nitrate compound, providing a total amount of nitrate in excess of 0.1 g/kg, on a dry weight basis.

The term 'compounded animal feed composition' as used herein, means a composition which is suitable for use as an animal feed and which is blended from various natural or non-natural base or raw materials and/or additives. Hence, in particular, the term 'compounded' is used herein to distinguish the animal feed composition according to the invention from any naturally occurring raw material. These blends or compounded animal feed compositions are formulated according to the specific requirements of the target animal. The main ingredients used in commercially prepared compounded animal feed compositions typically include wheat bran, rice bran, corn meal, cereal grains, such as barley, wheat, rye and oat, soybean meal, alfalfa meal, wheat powder and the like. A commercial compound feed composition will typically comprise no less than 10 weight% of crude protein and no less than 75 weight% of dry matter, although the invention is not particularly limited in this respect. Liquid, solid as well as semi-solid compounded animal feed compositions are encompassed within the scope of the present invention solid and semi-solid forms being particularly preferred. These compositions are typically manufactured as meal type, pellets, crumbles, muesli, extruded feed and expanded feed. In practice, livestock may typically be fed a combination of compounded animal feed compositions, such as that of the present invention, and silage or hay or the like. Typically, a compounded animal feed composition is fed in an amount within the range of 0.3 to 12 kg/animal/day, depending on the animal species. It is within the skills of the skilled person to determine proper amounts of these components to be included in the compounded animal feed composition, taking into account the animal species and the circumstances under which it is held.

The nitrate compound in the compounded animal feed composition of the invention typically provides a total amount of nitrate in excess of 0.1 g/kg, on a dry weight basis. The compounded animal feed composition of the invention may comprise any further feed additive typically used in the art. As is known by those skilled in the art, the term 'feed additive' in this context refers to products, used in animal nutrition for purposes of improving the quality of feed and the quality of food from animal origin, or to improve the animals' performance, e.g. providing enhanced digestibility of the feed materials. Non-limiting examples include technological additives such as preservatives, antioxidants, emulsifiers, stabilising agents, acidity regulators and silage additives; sensory additives, especially flavours and colorants; nutritional additives, such as vitamins, amino acids and trace elements; and zootechnical additives, such as digestibility enhancers and gut flora stabilizers.

As will be clear to those skilled in the art, the present compounded animal feed composition can comprise any further ingredient or additive, without departing from the scope of the invention.

Inorganic nitrate to promote a healthy gut flora.

The microflora in the faeces of the sows is known to be responsible for the instauration of a healthy microflora in the new born piglets that are born with a sterile gastrointestinal tract. It has been proposed that a balanced microflora in suckling piglets reduces diarrhoea incidence during the suckling period but also after weaning. A balanced microflora will thus effect the sows ability to raise the piglets. It has been demonstrated that the bacteria counts, such as counts of *Clostridia perfringens*, in faeces is lower for the sows supplemented with calcium nitrate double salt in both the gestation period and the lactation period. Thus, feed supplemented with inorganic nitrate, such as calcium nitrate double salt, has the ability to decreases the number of potentially endotoxin-producing bacteria in the gut of the gestating or lactating mammal, thereby lowering the risk of PDS (Post-parturient Dysgalactia Syndrome), thus affecting the sows productive performance, e.g. the ability to raise the piglets.

Accordingly, the invention provides inorganic nitrate, selected from the group of sodium nitrate, potassium nitrate, calcium nitrate, ammonium nitrate, or any combination thereof, most preferably the compound represented by the formula $5Ca(NO_3)_2 \cdot NH_4NO_3 \cdot 10H_2O$, for use to decreases the number of potentially endotoxin-producing bacteria in the gut, and/or promoting a healthy gut flora and/or lowering the risk of PDS (Post-parturient Dysgalactia Syndrome). In one embodiment, the invention is directed to an animal feed supplemented with inorganic nitrate, selected from the group of sodium nitrate, potassium nitrate, calcium nitrate, ammonium nitrate, or any combination thereof, most preferably

EP 3 291 691 B1

the compound represented by the formula $5Ca(NO_3)_2.NH_4NO_3-10H_2O$, for prophylactic and/or therapeutic treatment of PDS (Post-parturient Dysgalactic Syndrome).

According to another embodiment the invention is directed to an animal feed supplement comprising 10 to 100 weight% of an inorganic nitrate compound, or inorganic nitrate, selected from the group of sodium nitrate, potassium nitrate, calcium nitrate, ammonium nitrate, or any combination thereof, most preferably the compound represented by the formula $5Ca(NO_3)_2.NH_4NO_3-10H_2O$, for use as an antibiotic growth promotor.

The term "antibiotic growth promoter" is used to describe any medicine that destroys or inhibits bacteria. Antibiotic growth promotors may be administrated as a daily dose as a feed supplement to gestating mammals, mammals after farrowing and lactating mammals. It may also be administered at a low, sub-therapeutic dose to newborns.

It has been demonstrated that the invention decreases the number of potentially endotoxin-producing bacteria in the gut of the gestating or lactating mammal, thereby lowering the risk of PDS (Post-parturient Dysgalactia Syndrome).

According to a specific embodiment, the invention is concerned with a feed, suitable for a female monogastric mammal, in particular a sow, in lactation and/or gestation phase, comprising:

- 50 - 200 g/kg, preferably 100 -150 g/kg of crude protein,
- 10-100 g/kg, preferable 10-50 g/kg of crude fat,
- 25-200 g/kg, preferably 50-100 g/kg of crude fiber,
- 150 - 600 g/kg, preferably 200 - 400 g/kg of starch,
- 25 - 200 g/kg, preferably 50 - 100 g/kg of sugar, and
  0.1 - 5 weight%, preferably 0.2 - 2 weight% of calcium ammonium

nitrate, most preferably the compound, represented by the formula $5Ca(NO_3)_2-NH_4NO_3.10H_2O$.

According to another embodiment, said feed, suitable for a female monogastric mammal, in particular a sow, in lactation and/or gestation phase, comprises in addition 1.25 - 10 weight% of arginine.

While a description was made with particular reference to the specific embodiments, it will be understood that numerous modifications thereto will appear to those skilled in the art. The scope of the claims should not be limited by specific embodiments provided in the present disclosure, but should be given the broadest interpretation consistent with the disclosure as a whole.

## EXPERIMENTAL

Experiment 1 : Effect of dietary treatment on the health of a sow.

The first experiment consisted of 3 treatments formulated to obtain different levels of calcium nitrate double salt; 0.31, 0.63, 1.25% calcium nitrate double salt) with 5 sows per treatment. The sows were fed the experimental diets during the last 2 weeks of lactation. The composition of the experimental diets for experiment 1 can be found in Appendix 1.

Blood samples to determine methemoglobin levels were taken at start of the feeding period (as a control), after 1 week and end of the feeding period and 1 week after finishing the feeding period (n=4 blood samples per sow). Furthermore, feed intake was registered daily.

In total, 48 sows successfully finished the experiment and were used for the analysis. With regard to the negative effect of the supplementation of calcium nitrate double salt, the results showed that the methaemoglobin/haemoglobin ratios were only slightly increased at day 7 of the experiment but recovered before day 14 of the experiment.

*Results*

In experiment 1 the effect of dietary nitrate on blood haemoglobin and methaemoglobin and clinical signs of nitrate toxicity were analysed in 15 sows. The experimental diets were analysed on nitrate level to confirm the inclusion rate of the calcium nitrate double salt (Table 1). Analysed nitrate levels were slightly lower than the intended level. However, the deviation was within range to analyse the effect of high levels of dietary nitrate supplementation on the methaemoglobin levels in the blood of the sows.

8

Table 1 Intended and analysed nitrate levels in the experimental diets

| | T1 0.31% Calcium nitrate double salt | | T2 0.63% Calcium nitrate double salt | | T3 1.25% Calcium nitrate double salt | |
|---|---|---|---|---|---|---|
| Nitrate | *Int* | *Ana* | *Int* | *Ana* | *Int* | *Ana* |
| ($\mu$g/g) | 2000 | 1700 | 4000 | 3500 | 8000 | 7000 |

No effect of dietary treatment on methemoglobine/hemoglobine was found (Table 2). The levels of methaemoglobin were slightly increased at day 7 for all treatments, however, this increase was not observed at day 14 of the experiment. Furthermore, no clinical signs of nitrate toxicity, like increased respiratory rate, weakness and muscular tremors that indicate a high methaemoglobin level, were observed. Since no significant increase of dietary nitrate on methaemoglobin was found during the period the experimental diets were supplied, it was decided that there was no need for the last blood sampling (7 days after weaning) which was meant to monitor the recovery of the sows.

Table 2 :Effect of increasing nitrate levels on blood parameters (haemoglobin (Hb), methaemoglobin (Met Hb) and ratio methaemoglobin/haemoglobin)

| | Day 0 | | | Day 7 | | | Day 14 | | |
|---|---|---|---|---|---|---|---|---|---|
| Treatment | Hb g/dL | Met Hb g/dL | Met Hb % | Hb g/dL | Met Hb g/dL | Met Hb % | Hb g/dL | Met Hb g/dL | Met Hb % |
| 0.31% calcium nitrate double salt | 16.93 | 0.33 | 1.85 | 14.30 | 0.66 | 4.99 | 10.94 | 0.18 | 1.68 |
| 0.63% calcium nitrate double salt | 15.99 | 0.27 | 1.74 | 14.19 | 0.51 | 3.52 | 9.69 | 0.16 | 1.46 |
| 1.25% calcium nitrate double salt | 15.26 | 0.23 | 1.58 | 12.01 | 0.78 | 6.35 | 10.19 | 0.08 | 0.75 |

Experiment 2 : Effect of dietary treatment on the (reproductive performance of a sow.

*Experimental design*

In the second experiment sows were followed during one production cycle (from weaning to weaning). Sixty-three multiparous sows were divided into 3 treatment groups; 1) control, 2) same basal diet as control with supplementation of 0.31% calcium nitrate double salt and 3) same basal diet as control with the supplementation of 0.15% L-arginine to the diet. The level of L-arginine was included to provide the same amount of nitrogen as 0.31% calcium nitrate double salt. An overview of the treatments is given in Table 3. The composition of the experimental diets for experiment 2 can be found in Appendix 2.

Table 3. Description of the control and the test diet used during the experimental period

| | Treatment sows (WOI[1], gestation and lactation) | Inclusion rate | Diet code | | |
|---|---|---|---|---|---|
| | | | WOI | Gest. | Lact. |
| 1 | Control | - | A | D | A |
| 2 | Nitrate | 0.31% Calcium nitrate double salt | B | E | B |
| 3 | Arginine | 0.15% L-Arginine | C | F | C |
| [1] Weaning to oestrus interval | | | | | |

*Diet composition and manufacturing*

The experimental diets were formulated to meet the requirements for all essential nutrients for sows and piglets according to SFR recommendations. The composition of the experimental diets can be found in Appendix 2. Diets were manufactured by ABZ-Diervoeding in Leusden. This facility is specialised in producing experimental diets with high accuracy. The diets were prepared by double mixing. First a basal diet, sufficient for all treatments was prepared. The basal diet was then split into three portions and the test material was added to create the other two experimental treatments. The diets were pelleted at a maximum processing temperature of 80 °C. The diet were produced in 3 batches of gestation diet and 2 batches of lactation diet. After production, all diets were transported to the experimental facilities of Schothorst Feed Research (The Netherlands).

*Chemical analysis of the diets*

Samples from each pelleted diet were taken. These samples were split into three portions for analysis by Schothorst Feed Research, analysis by YARA AB and for storage. All diets were analysed for moisture, crude protein (CP), crude fat (EE), crude fibre (CF) and starch by Schothorst Feed Research in order to verify dietary nutrient composition. YARA AB analysed the diets on nitrate content to confirm the inclusion rate of the product. Representative samples of all diets were stored at -20 °C and will be kept for 5 years at Schothorst Feed Research.

*Animals and housing*

In total 63 sows (parity 2 to 8) were used in the 2nd experiment; 2 rounds with 29 sows in round 1 and 34 sows in round 2. The experiment was conducted with sows in good health and normal body condition at the start of the experiment. The sows had an average parity of 4.7 and parity was balanced across treatments as much as possible. Cross fostering was applied within 3 days after birth within a treatment to standardize the litter size at 12-14 piglets.
From weaning to a couple of days after insemination the sows were housed in individual pens (2.00m x 0.70 m). These pens were equipped with a drinking nipple and feeder and had a partly slatted floor (0.8 m). During gestation, sows were kept in group housing with groups of approximately 150 sows and 4 feeding stations available per group. Sows were transferred from the gestation unit to the farrowing rooms at approximately day 108 of gestation. The farrowing pens (2.25 x 2.50 m) were equipped with a feeding bin and sows were able to fill the feeder by pushing a metal bar in the feeder. Sows did not have access to straw or other bedding material. Fresh drinking water was freely available *ad-libitum* during gestation and lactation. The pens had a plastic slatted floor including a heated section for piglets. The temperature schedule was decreasing from 23°C at farrowing to 20°C at five days after farrowing. Artificial light was provided from 6:00 till 22:00 hours.

*Feeding scheme*

During the experiment sows were fed according to the scheme described in Table 4. The piglets were fed *ad libitum* from day 14 onwards.

Table 4. Feeding scheme of the sows during the experimental period

| Period | Day | Diet | Feed allowance (kg/day) |
|---|---|---|---|
| WOI[1] | 1-4 | Lactation | 3.5 |
| | 5-6 | | 2.5 |
| Gestation | 1-39 | Gestation | 2.8 |
| | 40-79 | | 2.6 |
| | 80- 108 | | 3.1 |
| | 109 - 112 | | 3.1 |
| | 113 - 115 | | 2.5 |
| Lactation | 1 | Lactation | 2.5 |
| | 2 | | 3.0 |
| | 3 | | 3.5 |
| | 4 | | 4.0 |
| | 5 | | 4.5 |
| | 6 | | 5.0 |
| | 7 | | 5.5 |
| | 8 | | 6.0 |
| | 9 | | 6.5 |

(continued)

| Period | Day | Diet | Feed allowance (kg/day) |
|---|---|---|---|
| | 10-weaning | | *Ad libitum* |

[1] Weaning to oestrus interval

*Observations and recorded parameters*

Several observations to determine sow and piglet performances were done during the experimental period. Sows and piglets were observed daily for abnormalities and clinical signs of illness. Medical treatments were individually registered. An overview of the measurements that were performed and recorded during the experiment are described below and can be found in Appendix 3.

Standard measurements

- Daily feed allowance and feed refusals per individual sow during weaning to oestrus interval (WOI), gestation and lactation;
- Body weight and back fat (ultrasonically, P2) at start of the experiment (weaning), day 108 (transfer to farrowing pen) and at weaning (day 26);
- Number of total born, live born, stillborn piglets and mummies;
- Individual piglet weight at birth, at day 3 after standardisation and weaning;
- Piglet mortality during lactation;
- Creep feed intake from approximately day 14 to weaning.

Body weight and back fat mobilisation of the sow and growth of the piglets were calculated. Furthermore, the variation in birth weight and weaning weight within a litter was determined.

Additional measurements

- At day 60 of gestation and at day 21 of lactation, blood samples were taken of all the sows to determine the effect of the dietary treatment on the methaemoglobin levels.
- At day 60 of gestation and day 1-2 of lactation, faecal samples were taken from all the sows determine the effect of dietary treatment on the total faecal eubacteria, Lactobacilli, *E. coli* and total *C. Perfringens.*
- On the morning after the farrowing rectal temperature of all the sows was measured to determine an effect on mastitis.

*Animal ethics*

The experiment was conducted according to the Animal Experimental and Ethics Committee Regulations/Laboratory Practise Codes in the Netherlands (Document AVD 246002015173).

*Statistical analysis*

Raw data were analysed for outliers and potentially influential outliers were removed with standardized residuals exceeding 2.5 standard deviation units. The results without outliers were subsequently statistically analysed by analysis of variance (ANOVA), using GenStat® for Windows (17th edition). If a significant treatment effect was found, the least significant difference test (LSD) was used for comparing treatment means.

Data was analysed with the following model:

$$Y_{ij} = \mu + diet_j + e_{ij}$$

Where:

$Y_{ij}$ = dependent variable
$\mu$ = overall mean
$diet_j$ = treatment sow diet (j=T1, T2, T3)
$e_{ij}$ = residual error

As a covariate for body weight and back fat development, the body weight and back fat of the sow at start (day of weaning) of the experiment was used. Percentage of dead born piglets, individual piglet weight at birth and coefficient of variance at birth were corrected for number of total born piglets. Pre-weaning litter growth and pre-weaning mortality were corrected for number of live born piglets, and if applicable weaning age.

Differences were considered to be significant when $P < 0.05$ and $0.05 \leq P < 0.10$ was considered to be a near-significant trend. Statistics were based on a two-sided test.

**Results**

To determine the effect of dietary nitrate supplementation in sow diet on sow and piglet performance, 21 sows per treatment started the experiment. However, 15 sows had to be excluded from the experiment mainly due to returning in oestrus (3), abortion (5) and small litter size (3). This resulted in 48 sows that were used for the statistical analysis (Table 5).

Table 5 Overview of the distribution and reason of exclusion of sows

|  | Control | Calcium nitrate double salt | L-Arginine |
|---|---|---|---|
| Small litter |  | 2 | 1 |
| Repeat | 2 | 1 |  |
| Abortion | 1 | 2 | 1 |
| No oestrus |  |  | 2 |
| Others |  | 1 | 2 |
| Remaining | 18 | 15 | 15 |

*1. Diet composition and analysis*

Experimental diets were produced in several batches; the lactation diet in 2 batches and the gestation diet in 3 batches. Samples of each dietary batch were analysed by SFR to determine dry matter, ash, crude protein (CP), crude fibre (CF), crude fat (CFat) to verify dietary composition. Analytical results are presented in Table 6. Analysed nutrients were in agreement with calculated composition. The highest variation was in the dry matter content and the rest of the nutrients were in-line with the expected values.

Table 6. Calculated and analysed dietary nutrient contents (g/kg) of the experimental diets

|  | Lactation diets | | | | | | Gestation diets | | | | | |
|---|---|---|---|---|---|---|---|---|---|---|---|---|
|  | A | | B | | C | | D | | E | | F | |
|  | *Cal* | *Ana* | *Cal* | *Ana* | *Cal* | *Ana* | *Cal* | *Ana* | *Cal* | *Ana* | *Cal* | *Ana* |
| Ash | 66.2 | 60.6 | 66.3 | 59.6 | 64.8 | 60.2 | 52.9 | 52.9 | 52.9 | 51.5 | 51.5 | 51.9 |
| Dry matter | 878.4 | 896.6 | 878.4 | 896.7 | 878.4 | 896.3 | 882.6 | 895.2 | 882.6 | 895.9 | 882.6 | 896.4 |
| Crude fibre | 65.1 | 61.7 | 65.1 | 61.2 | 64.1 | 61.9 | 102.6 | 103.8 | 102.6 | 105.1 | 102.6 | 105.9 |
| Crude protein | 141.6 | 148.2 | 141.6 | 150.3 | 144.5 | 149.4 | 111.3 | 119.2 | 111.3 | 120.7 | 114.2 | 120.2 |
| Crude fat (ah) | 34.6 | 39.8 | 34.6 | 39.9 | 34.6 | 39.6 | 42.8 | 49.7 | 42.8 | 49.2 | 42.8 | 48.4 |

Furthermore, each batch of the experimental diets were analysed on nitrate level to confirm the inclusion rate of the calcium nitrate double salt (Table 7). Analysed nitrate levels were slightly lower than the intended level. However, the deviation was within range to analyse the effect of dietary nitrate on performance of the sows and piglets.

Table 7 Intended and analysed nitrate levels ($\mu$g/g) in the experimental diets

| | Control | | Calcium nitrate double salt | | L-Arginine | |
|---|---|---|---|---|---|---|
| | *Int* | *Ana* | *Int* | *Ana* | *Int* | *Ana* |
| *Gestation diet* | | | | | | |
| Batch 1 | - | 95 | 2000 | 1700 | - | 93 |
| Batch 2 | - | 65 | 2000 | 1930 | - | 79 |
| Batch 3 | - | 130 | 2000 | 2050 | - | 120 |
| *Lactation diet* | | | | | | |
| batch 1 | - | 20 | 2000 | 1500 | - | 18 |
| batch 2 | - | 16 | 2000 | 1960 | - | 15 |

*Feed intake, body weight and back fat development*

Sows feed intake was calculated by difference in feed allowance and feed refusals during the experimental period. Average feed intake during gestation (day 0 to 108) was 2.7 kg/d and of the lactation diet (day 109 of gestation to weaning) was 5.2 kg/d. At start of the experiment (weaning), sows had an average body weight of 234 kg and a back fat thickness of 16.6 mm. On average the sows gained 44.2 kg body weight and 4.4 mm back fat during gestation and lost 36.6 kg body weight and 4.1 mm back fat during lactation.

In Table 8, the feed intake of the sows for the different experimental treatments is shown. A significant lower feed intake was found during gestation for the sows fed with calcium nitrate double salt compared to the other experimental treatments (P=0.008), resulting in a numerical lower increase in body weight. Although, no effect of dietary treatment on feed intake during lactation was found, a significant lower body weight loss was observed for the sows fed the calcium nitrate double salt (P=0.043) compared to the control diet, with the sows fed on L-arginine showing intermediate results.

Table 8. Effect of dietary treatment on feed intake and body weight (BW) and back-fat (BF) development

| | Control | Calcium nitrate double salt | L-Arginine | LSD[1] | P-value |
|---|---|---|---|---|---|
| *Feed intake* (kg/d) | | | | | |
| WOI (weaning - insemination) | 3.03 | 3.09 | 3.10 | 0.241 | 0.820 |
| Gestation (insemination -day 108) | 2.76[a] | 2.72[b] | 2.76[a] | 0.028 | *0.008* |
| Lactation (day 109 - weaning) | 5.25 | 5.17 | 5.31 | 0.354 | 0.750 |
| Weaning-weaning | 3.39 | 3.35 | 3.39 | 0.095 | 0.567 |
| *Body weight development (kg)* [2] | | | | | |
| Weaning(start) | 230 | 239 | 235 | 18.2 | 0.627 |
| Day 108 | 281 | 275 | 279 | 6.3 | 0.123 |
| Weaning (end) | *238* | 243 | 242 | 8.2 | 0.355 |
| Weaning - day 108 | 46.9 | 40.6 | 44.5 | 6.27 | 0.123 |
| Day 108 - weaning | -41.8[a] | -30.8[b] | -36.1[ab] | 8.85 | *0.043* |
| Weaning-weaning | 5.1 | 9.8 | 8.4 | 8.18 | 0.467 |
| *Back fat development (mm)* [2] | | | | | |
| Weaning (start) | 15.4[a] | 16.9[ab] | 17.7[b] | 1.87 | *0.037* |
| Day 108 | 19.7 | 19.9 | 20.0 | 1.26 | 0.855 |
| Weaning (end) | 15.5 | 15.8 | 16.0 | 1.24 | 0.733 |
| Weaning - day 108 | 3.23 | 3.28 | 3.71 | 1.135 | 0.649 |
| Day 108 - weaning | -4.16 | -4.05 | -4.03 | 1.584 | 0.985 |
| Weaning - weaning | -1.03 | -0.45 | -0.63 | 1.174 | 0.582 |

[1] LSD is least significant difference at $\alpha$ <0.05.
[2] Body weight and back fat thickness were corrected for body weight and back fat of the sow at start of the experiment (weaning).
[ab] Different superscripts within one row indicate a significant difference between treatments

*Sow performance*

On average, sows in the experiment had 17.2 total born piglets and 16.0 live born piglets with an average birth weight of 1281 gram (total born).

In Table 9, the litter size and birth weight of the piglets is shown.

Table 9. Effect of dietary treatment on the litter size and birth weight of the piglets

| | Control | Calcium nitrate double salt | L-Arginine | LSD[1] | P-value |
|---|---|---|---|---|---|
| *Litter size (n)* | | | | | |
| Total born | 17.8 | 16.7 | 17.1 | 1.78 | 0.470 |
| Live born | 16.4 | 15.3 | 16.1 | 1.63 | 0.346 |
| Still born | 1.3 | 1.3 | 1.0 | 1.11 | 0.809 |
| Mummies | 0.3 | 0.5 | 0.5 | 0.53 | 0.720 |
| % Still born[2] | 6.7 | 8.5 | 5.8 | 5.64 | 0.631 |
| *Birth weight (TB)* | | | | | |
| Litter (kg) | 21.9 | 19.6 | 23.0 | 3.04 | 0.078 |
| Individual (g)[2] | 1274 | 1211 | 1355 | 134.3 | 0.106 |
| Coefficient of variation (%)[2] | 22.9 | 25.5 | 22.9 | 3.89 | 0.324 |

[1] LSD is least significant difference at $\alpha < 0.05$.
[2] Corrected for the number of total born piglets.

*Piglet performance*

In this experiment the piglets had an average weaning weight of 7.6 kg, which means an average growth of 234 g/d from birth till weaning. Furthermore, the average pre-weaning piglet mortality was 7.1%

In Table 10, the effect of the different dietary treatments on piglet performance is shown.

Table 10. Effect of dietary treatment on piglet performance pre-weaning

| | Control | Calcium nitrate double salt | L-Arginine | LSD[1] | P-value |
|---|---|---|---|---|---|
| *Number of piglets* | | | | | |
| Start (after standardization) | 13.2 | 13.1 | 13.2 | 0.64 | 0.908 |
| Weaning | 12.4 | 12.0 | 12.1 | 0.96 | 0.574 |
| *Litter (kg)* | | | | | |
| Weaning weight | 96.9 | 91.7 | 91.2 | 10.90 | 0.498 |
| Growth [2] | 79.6 | 75.5 | 73.8 | 9.36 | 0.425 |
| *Piglet weight (kg)* | | | | | |
| Weaning weight [2] | 7.74 | 7.60 | 7.52 | 0.580 | 0.742 |
| Coefficient of variation (%)[2] | 15.4 | 15.4 | 15.9 | 2.81 | 0.646 |
| Growth [2] | 6.35 | 6.27 | 6.08 | 0.563 | 0.604 |
| *Mortality (%)* | | | | | |
| Start - weaning [2] | 5.4 | 8.0 | 8.4 | 6.86 | 0.621 |
| *Creep feed (g)* | | | | | |
| Piglet/d | 11.5 | 13.9 | 12.8 | 7.49 | 0.808 |

[1] LSD is least significant difference at $\alpha < 0.05$
[2] Corrected for the number of piglets after standardisation and weaning age.

*Intestinal health*

The effect of dietary treatment on intestinal health was analysed by determining the number of Total eubacteria, Lactobacilli, E. coli and Cl. Perfringens in the faeces during gestation and a couple of days after farrowing. As observed in Table 11, no effect of dietary treatment on faecal bacteria counts was found. However, Cl. Perfringens counts seemed to be lower for the sows supplemented with calcium nitrate double salt in both the gestation period and the lactation period.

Table 11 Effect of dietary treatment on faecal bacteria counts (cfu log $_{10}$)

| | Control | Calcium nitrate double salt | L-Arginine | LSD[1] | P-value |
|---|---|---|---|---|---|
| *Day 60 of gestation* | | | | | |
| Total eubacteria | 12.3 | 12.3 | 12.3 | 0.09 | 0.597 |
| Lactobacilli | 10.8 | 10.8 | 11.0 | 0.27 | 0.436 |
| *E. coli* | 8.4 | 8.4 | 8.4 | 0.49 | 0.963 |
| *Cl. Perfringens* | 9.0 | 8.6 | 8.7 | 0.27 | 0.147 |
| *After farrowing* | | | | | |
| Total eubacteria | 12.3 | 12.5 | 12.4 | 0.20 | 0.127 |
| Lactobacilli | 10.9 | 10.9 | 10.8 | 0.54 | 0.868 |
| *E. coli* | 9.3 | 9.6 | 9.5 | 0.53 | 0.480 |
| *Cl. Perfringens* | 9.0 | 8.5 | 9.0 | 0.61 | 0.227 |

[1] LSD is least significant difference at $\alpha < 0.05$

Furthermore, no effect of dietary treatment on rectal temperature of the sow as an indication of mastitis was found (Table 12).

Table 12 Effect of dietary treatment on rectal temperature of the sows the morning after farrowing

| | Control | Calcium nitrate double salt | L-Arginine | LSD[1] | P-value |
|---|---|---|---|---|---|
| Rectal temperature (°C) | 38.9 | 39.0 | 38.9 | 0.378 | 0.952 |

[1] LSD is least significant difference at $\alpha < 0.05$

*Blood parameters*

As in experiment 1, blood samples were also taken in experiment 2 to determine the effect of calcium nitrate double salt on blood methaemoglobin. As shown in Table 13, at day 60 of gestation sows that were fed with the L-arginine diet showed a significant lower methaemoglobin level compared to the other dietary treatments (P=0.001), resulting in a significant lower ratio methaemoglobin/haemoglobin (P=0.002). The sows fed the calcium nitrate double salt only had a numerical increased methaemoglobin level at day 60 of gestation compared to the sows fed the control diet. No effect of dietary treatments on blood levels at day 21 of lactation were found.

Table 13 Effect of dietary treatment on blood parameters (haemoglobin (Hb), methaemoglobin (Met Hb) and ratio methaemoglobin/haemoglobin (Met Hb/Hb)

| | Control | Calcium nitrate double salt | L-Arginine | LSD[1] | P-value |
|---|---|---|---|---|---|
| *Day 60 of gestation* | | | | | |
| Hb (g/dL) | 13.0 | 13.0 | 12.9 | 1.09 | 0.986 |
| Met Hb (g/dL) | 2.4[a] | 2.9[a] | 1.6[b] | 0.62 | 0.001 |
| Met Hb/Hb (%) | 18.8[a] | 22.7[a] | 12.9[b] | 5.33 | 0.002 |
| *Day 21 of lactation* | | | | | |
| Hb (g/dL) | 12.5 | 12.7 | 12.5 | 1.11 | 0.939 |
| Met Hb (g/dL) | 2.2 | 1.6 | 2.0 | 0.75 | 0.264 |
| Met Hb/Hb (%) | 16.1 | 13.4 | 15.9 | 5.25 | 0.504 |

[1] LSD is least significant difference at $\alpha < 0.05$
[ab] Different superscripts within one row indicate a significant difference between treatments

**Conclusion**

The objective of this project was to evaluate the effect of calcium nitrate double salt, supplemented to sows from weaning to weaning on sows and piglets performance. Initial hypothesis of supplementing gestation and lactation diet with calcium nitrate double salt was that it would have a similar effect on results productive as L-arginine due to a similar mode of action. Arginine is known to affect the development of the placenta and mammary gland by stimulating the development of the blood vessels, which would improve blood supply and therefore nutrient supply to the fetus and amino acid uptake of the mammary gland. An improved nutrient supply to the fetus can result in an increase in litter size and piglet weight and therefore litter size.

Since the dietary nitrate will partly be converted into nitrite in the body of the sow, the concern of whether the supplementation of calcium nitrate double salt to the diet could increase in methaemoglobin/ haemoglobin ratio in the blood of the sow resulting in oxygen shortage in the blood was evaluated. However, as the results showed the methaemoglobin/ haemoglobin ratios were only slightly increased at day 7 but recovered before day 14 of the experiment. In conclusion, the sows were able to adjust to the increase in nitrate due to a supplementation of calcium nitrate double salt to the diet. Thus no negative affect was detected to the health of the sows.

The supplementation of calcium nitrate double salt did result in a slightly lower feed intake during gestation, which could explain the difference in litter and piglet weight at birth between the group fed L-arginine supplemented diet compared to the CAN-fed group. However, no further difference was detected in the litter weight before weaning between the sows fed a diet supplemented with L-arginine and calcium nitrate double salt.

The supplementation of calcium nitrate double salt to the sow diets did result in a significant lower body weight loss of the sows during lactation, which can have a beneficial effect on reproductive performance of the sows in the next cycle (Hoving et al., Dom Anim 47, 1009 - 1016 (2012) due to a better follicle development during the last weeks of lactation.

Besides the effect on the placenta and the mammary gland, supplementation of nitrate to the gestating and lactation sow diets was expected to indirectly positively affect intestinal health and therefore reduce the excretion of pathogenic bacteria in the faeces. It was found that calcium nitrate double salt supplementation on bacteria counts in the faeces resulted in a numerically lower *Cl. Perfringens* counts, both during gestation and lactation period, which could benefit the health of the sows and piglets.

No essential difference in response to supplementation of L-arginine and calcium nitrate double salt were found in this experiment, thus a similar mode of action of calcium nitrate double salt as L-arginine cannot be denied.

**Appendix 1. Composition of the experimental diets for experiment 1**

Table 1. Composition (%) and calculated nutrient levels (g/kg) of the experimental diets for experiment 1

|  | A | B | C |
|---|---|---|---|
|  | 0.31% Calcium nitrate double salt | 0.63% Calcium nitrate double salt | 1.25% Calcium nitrate double salt |
| Barley | 15.00 | 15.00 | 15.00 |
| Maize | 20.00 | 20.00 | 20.00 |
| Molass cane >47.5%Su | 4.00 | 4.00 | 4.00 |
| Palm kernel meal. <20CF | 5.00 | 5.00 | 5.00 |
| Sugar beet pulp 20-25% | 2.50 | 2.50 | 2.50 |
| Soybean meal 47%CP | 2.86 | 2.86 | 2.86 |
| Wheat | 22.07 | 22.07 | 22.07 |
| Wheat middlings | 13.39 | 13.39 | 13.39 |
| Monocalcium phosphate | 0.68 | 0.68 | 0.68 |
| Salt | 0.24 | 0.24 | 0.24 |
| Sunflower hulls 38%CP | 10.00 | 10.00 | 10.00 |
| Lysine-HCl (L 79%) | 0.35 | 0.35 | 0.35 |
| Metheonine (DL 99%) | 0.01 | 0.01 | 0.01 |
| Threonine (L 98%) | 0.13 | 0.13 | 0.13 |
| Lys+trypt premix18/5 | 0.19 | 0.19 | 0.19 |
| Min/Vit Sow | 0.50 | 0.50 | 0.50 |
| Sodium bicarbonate | 0.31 | 0.31 | 0.31 |

(continued)

| | | A | B | C |
|---|---|---|---|---|
| | | 0.31% Calcium nitrate double salt | 0.63% Calcium nitrate double salt | 1.25% Calcium nitrate double salt |
| Fytase premix | | 0.33 | 0.33 | 0.33 |
| Calcium nitrate double salt | | 1.68 | 1.51 | 1.20 |
| Limestone | | 0.31 | 0.63 | 1.25 |
| Diamol | | 0.46 | 0.30 | - |
| **Nutrients** | | | | |
| g/Kg | Moisture | 128.22 | 128.22 | 128.22 |
| g/Kg | Ash | 65.93 | 66.07 | 66.32 |
| g/Kg | Crude Protein | 141.26 | 141.26 | 141.26 |
| g/Kg | Crude fat | 24.63 | 24.63 | 24.63 |
| g/Kg | Crude fibre | 53.93 | 53.93 | 53.93 |
| g/Kg | Starch | 378.48 | 378.48 | 378.48 |
| g/Kg | Sugar | 53.01 | 53.01 | 53.01 |
| MJ/kg | NE Swine | 8.77 | 8.77 | 8.77 |
| g/Kg | Ca | 9.30 | 9.30 | 9.30 |
| g/Kg | P | 6.07 | 6.07 | 6.07 |
| g/Kg | Na | 2.00 | 2.00 | 2.00 |
| g/Kg | Cl | 3.59 | 3.59 | 3.59 |
| g/Kg | K | 8.29 | 8.29 | 8.29 |
| g/Kg | Cu | 8.69 | 8.65 | 8.57 |
| g/Kg | Zn | 38.27 | 38.22 | 38.13 |
| g/Kg | dEB | 200.33 | 200.22 | 200.00 |
| g/Kg | avCav | 10.04 | 10.22 | 10.56 |
| g/Kg | dP intns | 3.20 | 3.20 | 3.20 |
| g/Kg | FCHO | 140.19 | 140.19 | 140.19 |
| g/Kg | ICHO | 95.53 | 95.53 | 95.53 |
| g/Kg | NSP | 216.96 | 216.96 | 216.96 |
| g/Kg | SID_LYSs | 7.14 | 7.14 | 7.14 |
| g/Kg | SID_METs | 2.20 | 2.20 | 2.20 |
| g/Kg | SID_M+Cs | 4.32 | 4.32 | 4.32 |
| g/Kg | SID_THRs | 5.01 | 5.01 | 5.01 |
| g/Kg | SID_TRPs | 1.41 | 1.41 | 1.41 |
| g/Kg | SID_ARGs | 7.84 | 7.84 | 7.84 |
| | SID met/SID lys | 0.31 | 0.31 | 0.31 |
| | SID m+c/SID lys | 0.60 | 0.60 | 0.60 |
| **Nutrients** | | A | B | C |
| | SID threo/SID lys | 0.70 | 0.70 | 0.70 |
| | SID tryp/SID lys | 0.20 | 0.20 | 0.20 |
| | SID arg/SID lys | 1.10 | 1.10 | 1.10 |
| | C16+18.0/Fat | 0.16 | 0.16 | 0.16 |
| g/Kg | C16+18:0 | 3.88 | 3.88 | 3.88 |
| g/Kg | C16+18>0 | 16.51 | 16.51 | 16.51 |
| | C16+18>0/C16+18.0 | 4.25 | 4.25 | 4.25 |
| g/Kg | C18:2 | 11.26 | 11.26 | 11.26 |
| g/Kg | C18:2+3 | 11.94 | 11.94 | 11.94 |

**Appendix 2. Composition of the experimental diets for experiment 2**

Table 1. Composition (%) and calculated nutrient levels (g/kg) of the experimental diets for experiment 2

| | | | Lactation diet | | | Gestation diet | | |
|---|---|---|---|---|---|---|---|---|
| | | | A | B | C | D | E | F |
| | | | Control | Calcium nitrate double salt | L-Arginine | Control | Calcium nitrate double salt | L-Arginine |
| | Barley | | 15.00 | 15.00 | 15.00 | 15.00 | 15.00 | 15.00 |
| | Maize | | 20.00 | 20.00 | 20.00 | 10.00 | 10.00 | 10.00 |
| | Molass. cane>47.5%Su | | 4.00 | 4.00 | 4.00 | 4.00 | 4.00 | 4.00 |
| | Palm kernel meal. <20CF | | 5.00 | 5.00 | 5.00 | 5.00 | 5.00 | 5.00 |
| | Sugar beet pulp 20-25% | | 2.50 | 2.50 | 2.50 | 6.56 | 6.56 | 6.56 |
| | Soybean meal 47%CP | | 2.86 | 2.86 | 2.86 | | | |
| | Wheat | | 22.07 | 22.07 | 22.07 | 17.3 | 17.3 | 17.3 |
| | Wheat middlings | | 13.39 | 13.39 | 13.39 | 15.00 | 15.00 | 15.00 |
| | Mono calciumphosphate | | 0.68 | 0.68 | 0.68 | 0.20 | 0.20 | 0.20 |
| | Salt | | 0.24 | 0.24 | 0.24 | | | |
| | Animal fat <0.5%PFA | | | | | 1.01 | 1.01 | 1.01 |
| | Soybean hulls >36%CF | | | | | 10.00 | 10.00 | 10.00 |
| | Sunflower hulls 38%CP | | 10.00 | 10.00 | 10.00 | 2.89 | 2.89 | 2.89 |
| | Lysine-HCl (L 79%) | | 0.35 | 0.35 | 0.35 | 0.18 | 0.18 | 0.18 |
| | Metheonine (DL 99%) | | 0.01 | 0.01 | 0.01 | | | |
| | Threonine (L 98%) | | 0.13 | 0.13 | 0.13 | 0.06 | 0.06 | 0.06 |
| | Lys+trypt premix18/5 | | 0.19 | 0.19 | 0.19 | | | |
| | Sugar beet pulp 20-25 | | | | | 10.00 | 10.00 | 10.00 |
| | Min/Vit Sow | | 0.50 | 0.50 | 0.50 | 0.50 | 0.50 | 0.50 |
| | Sodium bicarbonate | | 0.31 | 0.31 | 0.31 | 0.44 | 0.44 | 0.44 |
| | Limestone | | 1.84 | 1.68 | 1.84 | 0.88 | 0.73 | 0.88 |
| | Palm oil (coater) | | | | | 0.50 | 0.50 | 0.50 |
| | Fytase premix | | 0.33 | 0.33 | 0.33 | 0.33 | 0.33 | 0.33 |
| | Calcium nitrate double salt | | | 0.31 | | | 0.30 | |
| | Arginine (L 99%) | | | | 0.15 | | | 0.15 |
| | Diamol | | 0.61 | 0.46 | 0.46 | 0.15 | | |
| **Nutrients** | | | | | | | | |
| | g/Kg | Moisture | 128.22 | 128.22 | 128.21 | 122.71 | 122.72 | 122.70 |
| | g/Kg | Ash | 65.81 | 65.93 | 64.45 | 53.48 | 53.60 | 52.17 |
| | g/Kg | Crude Protein | 141.26 | 141.26 | 144.28 | 111.64 | 111.64 | 114.55 |
| | g/Kg | Crude fat | 24.63 | 24.63 | 24.63 | 36.57 | 36.57 | 36.57 |
| | g/Kg | Crude fibre | 53.93 | 53.93 | 53.93 | 95.69 | 95.69 | 95.69 |
| | g/Kg | Starch | 378.48 | 378.48 | 378.48 | 288.67 | 288.67 | 288.67 |
| | g/Kg | Sugar | 53.01 | 53.01 | 53.01 | 76.45 | 76.45 | 76.45 |
| | MJ/kg | NE Swine | 8.77 | 8.77 | 8.79 | 8.52 | 8.52 | 8.53 |
| | g/Kg | Ca | 9.30 | 9.30 | 9.30 | 6.20 | 6.20 | 6.20 |
| | g/Kg | P | 6.07 | 6.07 | 6.07 | 3.97 | 3.97 | 3.97 |
| | g/Kg | Na | 2.01 | 2.00 | 2.01 | 1.74 | 1.74 | 1.74 |
| | g/Kg | Cl | 3.59 | 3.59 | 3.59 | 1.71 | 1.71 | 1.71 |
| | g/Kg | K | 8.29 | 8.29 | 8.29 | 9.84 | 9.83 | 9.84 |
| | g/Kg | Cu | 8.73 | 8.69 | 8.73 | 7.02 | 6.98 | 7.02 |

(continued)

| Nutrients | | | | | | | |
|---|---|---|---|---|---|---|---|
| g/Kg | Zn | 38.32 | 38.27 | 38.32 | 36.93 | 36.88 | 36.93 |
| g/Kg | dEB | 200.4 | 200.3 | 200.4 | 280.11 | 280 | 280.11 |
| g/Kg | avCav | 9.87 | 10.04 | 9.87 | 6.77 | 6.93 | 6.77 |
| g/Kg | dP mild | 3.51 | 3.51 | 3.51 | 2.40 | 2.40 | 2.40 |
| g/Kg | dP intns | 3.20 | 3.20 | 3.20 | 2.11 | 2.11 | 2.11 |
| g/Kg | FCHO | 140.19 | 140.19 | 140.19 | 225.00 | 225.00 | 225.00 |
| g/Kg | ICHO | 95.53 | 95.53 | 95.53 | 108.43 | 108.43 | 108.43 |

| | | Gestation diet | | | Lactation diet | | |
|---|---|---|---|---|---|---|---|
| | | T1 | T2 | T3 | T1 | T2 | T3 |
| g/Kg | NSP | 216.96 | 216.96 | 216.96 | 317.11 | 317.11 | 317.11 |
| g/Kg | SID_LYSs | 7.14 | 7.14 | 7.14 | 4.35 | 4.35 | 4.35 |
| g/Kg | SID_METs | 2.20 | 2.20 | 2.20 | 1.50 | 1.50 | 1.50 |
| g/Kg | SID_M+Cs | 4.32 | 4.32 | 4.32 | 3.06 | 3.06 | 3.06 |
| g/Kg | SID_THRs | 5.01 | 5.01 | 5.01 | 3.14 | 3.14 | 3.14 |
| g/Kg | SID_TRPs | 1.41 | 1.41 | 1.41 | 0.92 | 0.92 | 0.92 |
| g/Kg | SID_ARGs | 7.84 | 7.84 | 9.32 | 5.2 | 5.2 | 6.63 |
| | SID met/SID lys | 0.31 | 0.31 | 0.31 | 0.34 | 0.34 | 0.34 |
| | SID m+c/SID lys | 0.60 | 0.60 | 0.60 | 0.70 | 0.70 | 0.70 |
| | SID threo/SID lys | 0.70 | 0.70 | 0.70 | 0.72 | 0.72 | 0.72 |
| | SID tryp/SID lys | 0.20 | 0.20 | 0.20 | 0.21 | 0.21 | 0.21 |
| | SID arg/SID lys | 1.10 | 1.10 | 1.30 | 1.19 | 1.19 | 1.52 |
| | C16+18.0/Fat | 0.16 | 0.16 | 0.16 | 0.25 | 0.25 | 0.25 |
| g/Kg | C16+18:0 | 3.88 | 3.88 | 3.88 | 8.99 | 8.99 | 8.99 |
| g/Kg | C16+18>0 | 16.51 | 16.51 | 16.51 | 20.52 | 20.52 | 20.52 |
| | C16+18>0/C16+18.0 | 4.25 | 4.25 | 4.25 | 2.28 | 2.28 | 2.28 |
| g/Kg | C18:2 | 11.26 | 11.26 | 11.26 | 10.37 | 10.37 | 10.37 |
| g/Kg | C18:2+3 | 11.94 | 11.94 | 11.94 | 11.19 | 11.19 | 11.19 |

**Appendix 3. Overview of observations during experiment 2**

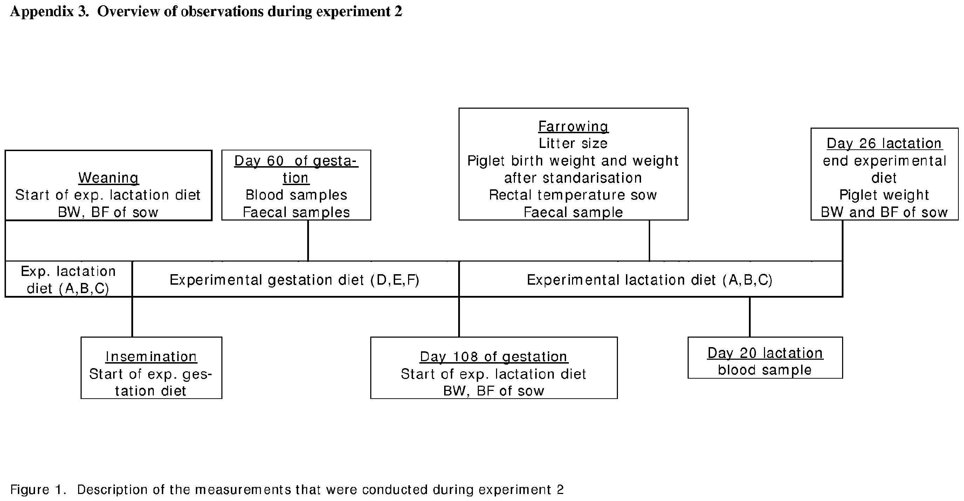

Figure 1. Description of the measurements that were conducted during experiment 2

**Claims**

1. Animal feed supplement comprising 10 to 100 weight% of an inorganic nitrate compound, for use in the prophylactic and/or therapeutic treatment of Post-parturient Dysgalactia Syndrome in a lactating and/or gestating non-human monogastric mammal, thereby lowering the risk of Post-parturient Dysgalactia Syndrome.

2. Animal feed supplement for use according to claim 1, wherein the inorganic nitrate compound is selected from the group of sodium nitrate, potassium nitrate, calcium nitrate, ammonium nitrate, or any combination thereof, most preferably the compound, represented by the formula $5Ca(NO_3)_2.NH_4NO_3\text{-}10H_2O$.

3. Animal feed supplement for use according to claim 1 or 2, wherein the inorganic nitrate compound is available in the form of a powder, a compacted powder, a crystal, a prill, a granule, a liquid, a gel, a solution, a liquid, or a flake.

4. Animal feed supplement for use according to any one of claims 1 to 3, further comprising 1 to 50 weight% of L-arginine.

5. Compounded animal feed composition comprising animal feed supplement comprising 10 to 100 weight% of an inorganic nitrate compound, providing a total amount of nitrate in excess of 0.1 g/kg, on a dry weight basis, for use in the prophylactic and/or therapeutic treatment of Post-parturient Dysgalactia Syndrome in a gestating and/or lactating non-human monogastric mammal, thereby lowering the risk of Post-parturient Dysgalactia Syndrome.

6. Inorganic nitrate for use in the prophylactic and/or therapeutic treatment of Post-parturient Dysgalactia Syndrome in a lactating and/or gestating non-human monogastric mammal, thereby lowering the risk of Post-parturient Dysgalactia Syndrome.

7. Inorganic nitrate for use according to claim 6, wherein the inorganic nitrate is selected from the group of sodium nitrate, potassium nitrate, calcium nitrate, ammonium nitrate, or any combination thereof, most preferably the compound, represented by the formula $5Ca(NO_3)_2.NH_4NO_3\text{-}10H_2O$.

8. Inorganic nitrate for use according to claim 6 or 7, wherein the inorganic nitrate is given in a daily dosage of nitrate in excess of 1 mg/kg body weight, preferably within the range of 1 to 320 mg/kg body weight.

9. Feed for use according to claim 5, wherein said feed is suitable for a non-human female monogastric mammal in lactation and/or gestation phase, comprising:

   - 50 - 200 g/kg, preferably 100 -150 g/kg of crude protein,
   - 10-100 g/kg, preferable 10-50 g/kg of crude fat,
   - 25-200 g/kg, preferably 50-100 g/kg of crude fiber,
   - 150 - 600 g/kg, preferably 200 - 400 g/kg of starch,
   - 25 - 200 g/kg, preferably 50 - 100 g/kg of sugar, and
   - 0.1 - 5 weight%, preferably 0.2 - 2 weight% of calcium ammonium nitrate, most preferably the compound, represented by the formula $5Ca(NO_3)_2\text{-}NH_4NO_3.10H_2O$.

10. Feed for use according to claim 9, wherein the feed in addition comprises 1.25 - 10 weight% of arginine.

**Patentansprüche**

1. Tierfutterzusatz, umfassend 10 bis 100 Gew.-% einer anorganischen Nitratverbindung, zur Verwendung bei der prophylaktischen und/oder therapeutischen Behandlung des postpartalen Dysgalaktie-Syndroms bei einem laktierenden und/oder trächtigen nicht-menschlichen monogastrischen Säugetier, wodurch das Risiko eines postpartalen Dysgalaktie-Syndroms gesenkt wird.

2. Tierfutterzusatz zur Verwendung nach Anspruch 1, wobei die anorganische Nitratverbindung ausgewählt ist aus der Gruppe Natriumnitrat, Kaliumnitrat, Calciumnitrat, Ammoniumnitrat oder einer beliebigen Kombination davon, am stärksten bevorzugt die Verbindung, die durch die Formel $5Ca(NO_3)_2.NH_4NO_3\text{-}10H_2O$ dargestellt wird.

3. Tierfutterzusatz zur Verwendung nach Anspruch 1 oder 2, wobei die anorganische Nitratverbindung in Form eines Pulvers, eines verdichteten Pulvers, eines Kristalls, einer Granalie, eines Granulats, einer Flüssigkeit, eines Gels, einer Lösung, einer Flüssigkeit oder einer Flocke vorliegt.

**4.** Tierfutterzusatz zur Verwendung nach einem der Ansprüche 1 bis 3, zudem umfassend 1 bis 50 Gew.-% L-Arginin.

**5.** Zusammengesetzte Tierfutterzusammensetzung, die einen Tierfutterzusatz umfasst, der 10 bis 100 Gew.-% einer anorganischen Nitratverbindung umfasst, die eine Gesamtmenge an Nitrat von mehr als 0,1 g/kg bezogen auf das Trockengewicht bereitstellt, zur Verwendung bei der prophylaktischen und/oder therapeutischen Behandlung des postpartalen Dysgalaktie-Syndroms bei einem trächtigen und/oder laktierenden nicht-menschlichen monogastrischen Säugetier, wodurch das Risiko des postpartalen Dysgalaktie-Syndroms gesenkt wird.

**6.** Anorganisches Nitrat zur Verwendung bei der prophylaktischen und/oder therapeutischen Behandlung des postpartalen Dysgalaktie-Syndroms bei einem laktierenden und/oder trächtigen nicht-menschlichen monogastrischen Säugetier, wodurch das Risiko des postpartalen Dysgalaktie-Syndroms gesenkt wird.

**7.** Anorganisches Nitrat zur Verwendung nach Anspruch 6, wobei das anorganische Nitrat ausgewählt ist aus der Gruppe Natriumnitrat, Kaliumnitrat, Calciumnitrat, Ammoniumnitrat oder einer Kombination davon, am stärksten bevorzugt die Verbindung, die durch die Formel $5Ca(NO_3)_2.NH_4NO_3\text{-}10H_2O$ dargestellt wird.

**8.** Anorganisches Nitrat zur Verwendung nach Anspruch 6 oder 7, wobei das anorganische Nitrat in einer täglichen Nitratdosis von mehr als 1 mg/kg Körpergewicht, vorzugsweise im Bereich von 1 bis 320 mg/kg Körpergewicht, verabreicht wird.

**9.** Futter zur Verwendung nach Anspruch 5, wobei das Futter für ein nicht-menschliches weibliches monogastrisches Säugetier in der Laktations- und/oder Trächtigkeitsphase geeignet ist, umfassend:

- 50 - 200 g, vorzugsweise 100 - 150 g/kg Rohprotein,
- 10 - 100 g/kg, vorzugsweise 10 - 50 g/kg Rohfett,
- 25 - 200 g/kg, vorzugsweise 50 - 100 g/kg Rohfaser,
- 150 - 600 g/kg, vorzugsweise 200 - 400 g/kg Stärke,
- 25 - 200 g/kg, vorzugsweise 50 - 100 g/kg Zucker, und
- 0,1 - 5 Gew.-%, vorzugsweise 0,2 - 2 Gew.-% Calciumammoniumnitrat, am stärksten bevorzugt die Verbindung, die durch die Formel $5Ca(NO_3)_2\text{-}NH_4NO_3.10H_2O$ dargestellt wird.

**10.** Futter zur Verwendung nach Anspruch 9, wobei das Futter zusätzlich 1,25 - 10 Gew.-% Arginin enthält.

## Revendications

**1.** Supplément alimentaire pour animaux comprenant 10 à 100 % en poids d'un composé de nitrate inorganique, pour une utilisation dans le traitement prophylactique et/ou thérapeutique du syndrome de dysgalactie post-parturiente chez un mammifère monogastrique non humain allaitant et/ou en gestation, abaissant ainsi le risque de syndrome de dysgalactie post-parturiente.

**2.** Supplément alimentaire pour animaux pour une utilisation selon la revendication 1, le composé de nitrate inorganique étant choisi dans le groupe du nitrate de sodium, du nitrate de potassium, du nitrate de calcium, du nitrate d'ammonium, ou une quelconque combinaison correspondante, le plus préférablement le composé, représenté par la formule $5Ca(NO_3)_2.NH_4NO_3\text{-}10H_2O$.

**3.** Supplément alimentaire pour animaux pour une utilisation selon la revendication 1 ou 2, le composé de nitrate inorganique étant disponible sous la forme d'une poudre, d'une poudre compactée, d'un cristal, d'un grelonage, d'un granulé, d'un liquide, d'un gel, d'une solution, d'un liquide ou d'une paillette.

**4.** Supplément alimentaire pour animaux pour une utilisation selon l'une quelconque des revendication 1 à 3, comprenant en outre 1 à 50 % en poids de L-arginine.

**5.** Composition alimentaire pour animaux compoundée comprenant un supplément alimentaire pour animaux comprenant 10 à 100 % en poids d'un composé de nitrate inorganique, fournissant une quantité totale de nitrate dépassant 0,1 g/kg, sur une base de poids sec, pour une utilisation dans le traitement prophylactique et/ou thérapeutique du syndrome de dysgalactie post-parturiente chez un mammifère monogastrique non humain en gestation et/ou allaitant, abaissant ainsi le risque de syndrome de dysgalactie post-parturiente.

6. Nitrate inorganique pour une utilisation dans le traitement prophylactique et/ou thérapeutique du syndrome de dysgalactie post-parturiente chez un mammifère monogastrique non humain allaitant et/ou en gestation, abaissant ainsi le risque de syndrome de dysgalactie post-parturiente.

7. Nitrate inorganique pour une utilisation selon la revendication 6, le nitrate inorganique étant choisi dans le groupe du nitrate de sodium, du nitrate de potassium, du nitrate de calcium, du nitrate d'ammonium, ou une quelconque combinaison correspondante, le plus préférablement le composé, représenté par la formule $5Ca(NO_3)_2.NH_4NO_3\text{-}10H_2O$.

8. Nitrate inorganique pour une utilisation selon la revendication 6 ou 7, le nitrate inorganique étant donné en un dosage quotidien de nitrate dépassant 1 mg/kg de poids corporel, préférablement dans la plage de 1 à 320 mg/kg de poids corporel.

9. Aliment pour une utilisation selon la revendication 5, ledit aliment étant approprié pour un mammifère monogastrique femelle non humain en phase de lactation et/ou gestation, comprenant :

   - 50 à 200 g/kg, préférablement 100 à 150 g/kg de protéines brutes,
   - 10 à 100 g/kg, préférablement 10 à 50 g/kg de graisse brute,
   - 25 à 200 g/kg, préférablement 50 à 100 g/kg de fibres brutes,
   - 150 à 600 g/kg, préférablement 200 à 400 g/kg d'amidon,
   - 25 à 200 g/kg, préférablement 50 à 100 g/kg de sucre, et
   - 0,1 à 5 % en poids, préférablement 0,2 à 2 % en poids de nitrate de calcium et d'ammonium, le plus préférablement le composé, représenté par la formule $5Ca(NO_3)_2\text{-}NH_4NO_3.10H_2O$.

10. Aliment pour une utilisation selon la revendication 9, l'aliment comprenant de plus 1,25 à 10 % en poids d'arginine.

**Appendix 3. Overview of observations during experiment 2**

| | |
|---|---|
| **Weaning** <br> Start of exp. lactation diet <br> BW, BF of sow | **Day 60 of gestation** <br> Blood samples <br> Faecal samples |

**Farrowing** <br> Litter size <br> Piglet birth weight and weight <br> after standarisation <br> Rectal temperature sow <br> Faecal sample

**Day 26 lactation** <br> end experimental <br> diet <br> Piglet weight <br> BW and BF of sow

Exp. lactation diet (A,B,C) — Experimental gestation diet (D,E,F) — Experimental lactation diet (A,B,C)

**Insemination** <br> Start of exp. gestation diet

**Day 108 of gestation** <br> Start of exp. lactation diet <br> BW, BF of sow

**Day 20 lactation** <br> blood sample

Figure 1. Description of the measurements that were conducted during experiment 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2011010921 A2, Provimi

- EP 1408771 A1

### Non-patent literature cited in the description

- **P.J. O'HARA ; A.J. FRASER.** Nitrate poisoning in cattle grazing crops. *New Zealand Veterinary Journal,* 1975, vol. 23 (4
- *The EFSA Journal,* 2009, vol. 1017, 1-47
- **BUTLER AR ; FEELISCH M.** Therapeutic Uses of Inorganic nitrite and nitrate from the past to the future. *Circulation,* 2008, vol. 117, 2151-2159
- **HORD ND ; TANG Y ; BRYAN NS.** Food sources of nitrates and nitrites: the physiologic context for potential health benefits. *Am J Clin Nutr,* 2009, vol. 90, 1-10
- **DYKHUIZEN RS ; FRAZER R ; DUNCUN C ; SMITH C ; GOLDEN M ; BENJAMIN N ; LEIFERT C.** Antimicrobial effect of acidified nitrite on gut pathogens: Importance of dietary nitrate in host defense. *Antimicrobial agents and chemotherapy,* 1996, vol. 40, 1422-1425
- **TREVISI P ; CASINI L ; NISI I ; MESSORI S ; BOSI P.** Effect of high oral doses of nitrate on salivary recirculation of nitrates and nitrites and on bacterial diversity in the saliva of young pigs. *J Anim Phys and Anim Nutr,* 2011, vol. 95, 206-213
- **POSI P ; CASINI L ; TITTARELLI C ; MINIERI L ; DE FILIPPI S ; TREVISI R ; CLAVENZANI R ; MAZZONI M.** Effect of dietary addition of nitrate on growth, salivary and gastric function, immune response, and excretion of Salmonella enterica serovar typhimurium, in weaning pigs challenged with this microbe strain. *It J Anim Sci,* 2007, vol. 6 (1), 266-268

- **MODESTO M ; D'AIMMO MR ; STEFANINI I ; MAZZONI M ; BOSI P ; BIAVATI B.** Antimicrobial effect of dietary nitrate in weaning piglets challenged or not with Salmonella enterica serovar typhimurium. *Cultivating the Future Based on Science: 2nd Conference of the International Society of Organic Agriculture Research ISOFAR, Modena, Italy,* 18 June 2008, vol. 2, 146-149
- **MODESTOA M ; STEFANINIA I ; D'AIMMOA MR ; NISSENA L ; TABANELLIA D ; MAZZONIB M ; BOSIB P ; STROZZIC GP ; BIAVATIA B.** Strategies to augment non-immune system based defence mechanisms against gastrointestinal diseases in pigs. *Wageningen J Life Sci,* 2011, vol. 58, 149-156
- **M.T SORENSEN ; B.B JENSEN ; H.D POULSEN.** Nitrate and pig manure in drinking water to early weaned piglets and growing pigs. *Livestock Production Science,* 1994, vol. 39 (2), 223-227
- *Bioresource Technology,* 2014, vol. 155, 129-135
- **R.W. SEERLEY et al.** ffect of nitrate or nitrite administered continuously in drinking water for swine and sheep. *Journal of Animal Science,* 1965, vol. 24 (4), 1014-1019
- **D. TYDLITAT et al.** *Acta Veterinaria BRNO,* 2007, vol. 76 (4), 585-593
- **HOVING et al.** *Dom Anim,* 2012, vol. 47, 1009-1016